# FASCICULE DE BREVET EUROPEEN

(11) **EP 3 112 262 B1**
(45) Date de publication et mention de la délivrance du brevet: **20.02.2019**
(21) Numéro de dépôt: 16177166.2
(22) Date de dépôt: 30.06.2016
(51) Int. Cl.: B64C 25/34

(54) **ATTERRISSEUR COMPORTANT UN DÉPÔT ZINC-NICKEL RÉSISTANT À L'USURE DE CONTACT**
FAHRWERK MIT EINER VERSCHLEISSFESTEN ZINK-NICKEL-BESCHICHTUNG
LANDING GEAR COMPRISING A CONTACT WEAR-RESISTANT ZINC-NICKEL DEPOSIT

(30) Priorité: 03.07.2015 FR 1556303
(43) Date de publication de la demande: 04.01.2017
(73) Titulaire: Safran Landing Systems, 78140 Vélizy-Villacoublay (FR)
(72) Inventeur: MIERZEJEWSKI, SACHA, 78140 VELIZY-VILLACOUBLAY (FR); OTTENIO, Romain, 78140 VELIZY-VILLACOUBLAY (FR)
(74) Mandataire: Lavialle, Bruno François Stéphane

(56) Documents cités:
- FR-A- 1 033 176
- US-A- 2 419 231
- US-A- 2 851 231
- US-A1- 2008 131 721
- US-A1- 2013 195 580
- US-B1- 6 676 076

## Description

La présente invention concerne le domaine des atterrisseurs pour aéronefs.

### ARRIERE PLAN DE L'INVENTION

Plus particulièrement, l'invention concerne un atterrisseur pour aéronef comportant :
- une tige d'atterrisseur s'étendant selon un axe principal de l'atterrisseur ;
- au moins un essieu relié mécaniquement à un premier côté de la tige d'atterrisseur ;
- au moins une roue montée à rotation autour dudit au moins un essieu ;
- au moins un amortisseur disposé pour amortir un mouvement de coulissement de ladite tige d'atterrisseur par rapport à une structure de l'aéronef.

Un tel atterrisseur est connu du document US 6676076.

L'atterrisseur comporte en outre au moins un premier couple de première et seconde pièces, ladite première pièce présentant un substrat en acier et une couche de glissement formée sur ce substrat, la seconde pièce étant montée en contact glissant contre ladite couche de glissement, ledit montage en contact glissant autorisant une amplitude maximale de glissement rectiligne de cette seconde pièce contre ladite couche de glissement de la première pièce, strictement inférieure à 0.5mm, la couche de glissement étant adaptée à supporter, au moins lors du glissement, une pression surfacique supérieure à 50 MPa.

Lors de l'utilisation de l'atterrisseur pour supporter l'aéronef et le faire rouler sur le sol, malgré l'usage d'un amortisseur, des vibrations importantes apparaissent dans l'atterrisseur. Ces vibrations génèrent sur les surfaces en contact entre pièces, un phénomène d'usure de contact, aussi connu sous le terme de fretting.

Ce phénomène d'usure de contact est particulièrement prononcé :
- lorsqu'il existe une amplitude de glissement relatif des pièces mise en contact l'une contre l'autre ;
- lorsque cette amplitude de glissement relatif est faible, en l'occurrence inférieure à 0.5mm ; et
- lorsque la pression surfacique appliquée entre ces pièces en contact est importante, en l'occurrence supérieure à 50 MPa.

La présence d'un glissement de faible amplitude entre deux pièces l'une contre l'autre contribue à concentrer le phénomène d'usure sur une faible surface de contact entre ces pièces. Ceci augmente l'effet d'usure en profondeur de la pièce et augmente ainsi le risque de sa corrosion et de sa fissuration. Ceci est particulièrement vrai pour les pièces en acier faiblement allié.

Cette usure par contact est d'autant plus importante que la fréquence des vibrations transmise lors du roulage de l'aéronef sur le sol est importante.

Pour limiter ce phénomène d'usure par contact / fretting, il est connu de former sur le substrat en acier de la pièce ayant tendance à s'user ou à user une autre pièce, une couche de glissement en chrome qui présente l'avantage d'être un matériau très dur et résistant au fretting.

Il a été constaté que l'usage du chrome n'est parfois pas satisfaisant car des microfissures peuvent traverser la couche de chrome, atteindre le substrat et générer des points de corrosion susceptibles de créer des amorces de fissuration préjudiciables à la tenue mécanique de la pièce ainsi corrodée.

### OBJET DE L'INVENTION

Un objet de la présente invention est de fournir une atterrisseur alternatif permettant d'adresser, au moins partiellement, à la fois la question de l'usure par contact entre des pièces et la question de la corrosion à proximité de ce contact.

### RESUME DE L'INVENTION

A cet effet, il est proposé un atterrisseur pour aéronef comportant :
- une tige d'atterrisseur s'étendant selon un axe principal de l'atterrisseur ;
- au moins un essieu relié mécaniquement à un premier côté de la tige d'atterrisseur ;
- au moins une roue montée à rotation autour dudit au moins un essieu ;
- au moins un amortisseur disposé pour amortir un mouvement de coulissement de ladite tige d'atterrisseur par rapport à une structure de l'aéronef.

Cet atterrisseur comporte en outre au moins un premier couple de première et seconde pièces, ladite première pièce présentant un substrat en acier et une couche de glissement formée sur ce substrat, la seconde pièce étant montée en contact glissant contre ladite couche de glissement avec une amplitude maximale de glissement rectiligne de cette seconde pièce contre ladite couche de glissement de la première pièce, strictement inférieure à 0.5mm, la couche de glissement étant adaptée à supporter, au moins lors du glissement, une pression surfacique supérieure à 50 MPa.

Cet atterrisseur selon l'invention est essentiellement caractérisé en ce que :
- la couche de glissement est en alliage de zinc et de nickel comportant, en pourcentage massique de l'alliage, entre 12% et 18% de nickel, au plus 0.5% d'autres éléments que le nickel et le zinc, le reste étant du zinc ; et en ce que
- la première pièce présente également une couche de protection contre la corrosion s'étendant depuis la couche de glissement, cette couche de protection étant formée dudit alliage de zinc et de nickel.

La couche de glissement s'étend à l'endroit où les première et seconde pièces du couple de pièces entrent en contact et frottent lorsque ces pièces sont glissées l'une contre l'autre dans la limite de l'amplitude maximale de glissement rectiligne autorisée.

Par amplitude maximale de glissement rectiligne autorisée, on entend la distance de déplacement rectiligne la plus importante mesurable entre ces première et seconde pièces liées entre elles mécaniquement. Ainsi, le plus grand mouvement relatif autorisé entre ces première et seconde pièces suivant un sens de déplacement linéaire, alors que la couche de glissement de la première pièce frotte contre la seconde pièce, présente une amplitude qui est appelée « amplitude maximale de glissement rectiligne de cette seconde pièce contre ladite couche de glissement de la première pièce ».

Le fait que cette couche de glissement soit en alliage de zinc et de nickel comportant, en pourcentage massique de l'alliage, entre 12% et 18% de nickel, au plus 0.5% d'autres éléments que le nickel et le zinc, le reste étant du zinc, permet d'avoir une couche de glissement particulièrement résistante au fretting tout en présentant un risque réduit de corrosion du substrat acier en cas d'apparition de microfissures au travers de la couche de glissement. En effet, la couche de zinc-nickel est une couche sacrificielle, c'est-à-dire qu'elle se corrode préférentiellement par rapport à l'acier.

L'alliage selon l'invention, présente une importante phase Gamma de cristallographie ce qui en augmente la dureté et par conséquent la résistance à l'usure. Ainsi, la couche de glissement est apte à supporter une pression surfacique supérieure à 50 MPa avec un coefficient de frottement à sec de l'ordre 0.3 ou un coefficient de frottement en milieu lubrifié de l'ordre de 0.15.

Idéalement, l'alliage de zinc et de nickel contient entre 12% et 16% de nickel.

Avec une telle plage de nickel entre 12 et 16%, on assure une protection améliorée contre la corrosion. Typiquement la couche présente une dureté de l'ordre de 450 HV0.01 (essai de dureté à 10 grammes).

Par ailleurs, à rugosité égale, cet alliage de zinc nickel présente un plus faible coefficient de frottement que le coefficient de frottement d'une couche de glissement en chrome.

Ainsi, lorsque le phénomène d'usure par contact / par fretting se déroule avec une pression surfacique supérieure à 50MPa, la couche de glissement de l'invention limite le frottement contre la seconde pièce et par conséquent limite l'usure occasionnée sur cette seconde pièce.

Du fait de son caractère sacrificiel, la couche de glissement confère également une meilleure protection anticorrosion que le chrome sur la zone de substrat qu'elle recouvre.

Le fait que ce même alliage de zinc et de nickel soit utilisé à la fois pour former la couche de glissement et une couche de protection contre la corrosion en dehors de la zone de fretting rectiligne est d'autant plus avantageux que cette couche de protection contre la corrosion s'étend depuis la couche de glissement, sans qu'il n'y ait de discontinuité de couche.

La continuité entre la couche de frottement et la couche de protection contre la corrosion supprime les problèmes d'interface / de jonction entre une couche de glissement et une couche adjacente de protection contre la corrosion.

Le fait d'avoir un seul et même alliage de zinc et de nickel pour former la couche de glissement et la couche de protection contre la corrosion permet d'avoir sur le substrat de la première pièce, une seule et même couche continue formée d'un seul et même alliage de zinc et de nickel. Cette couche continue forme une couche de frottement au niveau de la zone de contact glissant entre les pièces et une couche de protection contre la corrosion en dehors de cette zone de contact glissant.

Un autre avantage de l'invention est que lorsque la rugosité du substrat en acier a été définie, il est possible d'obtenir directement après application de la couche de glissement sur le substrat, un état de surface de la couche de glissement conforme à une valeur cible, sans pour cela nécessiter d'opération complémentaire de surfaçage, de polissage ou de rectification.

En effet, on remarque que lorsque la couche de glissement en alliage de zinc et de nickel est appliquée par dépôt en bain électrolytique, l'état de surface de la couche ainsi appliquée est très proche de l'état de surface du substrat avant application de la couche de glissement.

Dans un mode de réalisation préférentiel, ladite amplitude maximale de glissement rectiligne de la seconde pièce contre ladite couche de glissement de la première pièce est strictement inférieure à 100 microns et préférentiellement inférieure à 60 microns.

L'invention est particulièrement adaptée pour de faibles amplitudes de glissement qui impliquent des arrêts de déplacement rapprochés l'un de l'autre, c'est-à-dire moins de 100 microns. Cette proximité entre les arrêts peut engendrer une sensibilisation accrue à l'usure de contact / fretting. Ainsi, l'usage de la couche de glissement en alliage de zinc-nickel trouve toute son utilité pour des amplitudes maximales de glissement inférieures à 100 microns et préférentiellement pour les amplitudes de glissement inférieure à 60 microns, préférentiellement comprises entre 5 et 30 microns.

### BREVE DESCRIPTION DES DESSINS

L'invention sera mieux comprise à la lecture de la description qui suit de modes de réalisation non limitatifs, en référence aux figures des dessins annexés parmi lesquelles :

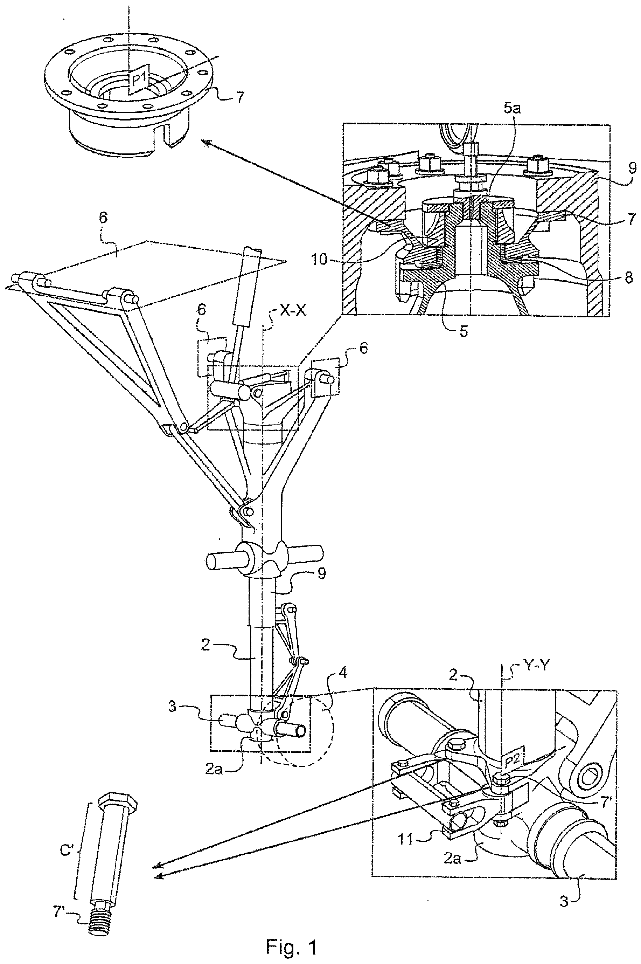

- La figure 1 présente un atterrisseur comportant plusieurs exemples de couples de première et seconde pièces. Pour chaque couple, la première pièce est en acier et porte une couche de glissement en alliage de zinc et de nickel pour limiter la corrosion et l'usure de contact sous forte contrainte mécanique et avec de faibles amplitudes de glissement entre pièces du couple. Selon un premier exemple, un couple de première et seconde pièces peut constituer une interface de liaison entre un amortisseur et un caisson tubulaire de l'atterrisseur. Selon un second exemple, un couple de première et seconde pièces peut constituer une interface de liaison entre la tige d'atterrisseur et une attache de remorquage adaptée et disposée pour être tractée à l'aide d'un véhicule de remorquage de l'aéronef.
- La figure 2a illustre une vue en coupe transversale, selon un plan P1, détaillant un exemple de couple de pièces visible à la figure 1.
   Ce couple constitue une interface de liaison entre amortisseur et caisson tubulaire de l'atterrisseur.
- La figure 2b est une vue en coupe transversale de la première pièce de la figure 2a où l'on voit la couche de glissement C permettant le glissement G.
- La figure 3a illustre une vue en coupe transversale, selon un plan P2, détaillant un autre exemple de couple de pièces visible à la figure 1. Ce couple constitue une interface de liaison entre la tige d'atterrisseur et une attache de remorquage prévue pour tracter l'aéronef lors de son roulage.
- La figure 3b est une vue en coupe transversale de la première pièce 7' visible à la figure 3a. Sur cette figure 3a, on voit la couche de glissement C' pratiquée autour et le long de cette première pièce 7' pour permettre le glissement G'. Cette première pièce 7' est ici en forme d'axe de liaison et plus particulièrement de boulon.

### DESCRIPTION DETAILLEE DE L'INVENTION

Comme indiqué précédemment, l'invention concerne un atterrisseur 1 pour aéronef. Cet atterrisseur 1 comporte :
- une tige d'atterrisseur 2 s'étendant selon un axe principal X-X de l'atterrisseur 1 ;
- au moins un essieu 3 relié mécaniquement à un premier côté 2a de la tige 2 ;
- au moins une roue 4 montée à rotation autour dudit au moins un essieu 3 ;
- au moins un amortisseur 5 disposé pour amortir un mouvement de coulissement de ladite tige d'atterrisseur 2 par rapport à une structure de l'aéronef 6.

L'atterrisseur 1 comporte en outre au moins un premier couple de première et seconde pièces 7, 8, 7', 8' .

En l'occurrence, deux exemples de couples de première et seconde pièces seront illustrés ci-après, l'un étant un couple de pièces formant une interface de liaison entre amortisseur 5 et caisson tubulaire 9 de l'atterrisseur et l'autre étant un couple de pièces formant une interface entre la tige de l'atterrisseur 2 et une attache de remorquage 11 pour tracter l'aéronef à l'aide d'un véhicule au sol.

De manière générale, pour chaque couple de première et seconde pièces 7, 7', on retrouve :
- une première pièce 7, 7' présentant un substrat en acier et une couche de glissement C, C' formée sur ce substrat ;
- une seconde pièce 8, 8' montée en contact glissant contre ladite couche de glissement C, C' avec une amplitude maximale de glissement rectiligne G, G' autorisée de cette seconde pièce 8, 8' contre ladite couche de glissement C, C', strictement inférieure à 0.5mm, la couche de glissement C, C' étant adaptée à supporter, au moins lors du glissement, une pression surfacique supérieure à 50 MPa.

Dans chaque couple :
- la couche de glissement C, C'est en alliage de zinc et de nickel comportant, en pourcentage massique de l'alliage, entre 12% et 18% de nickel, préférentiellement entre 12% et 18% de nickel, au plus 0.5% d'autres éléments que le nickel et le zinc, le reste étant du zinc ; et
- la première pièce présente en outre une couche de protection P, P' contre la corrosion s'étendant depuis la couche de glissement C, C', cette couche de protection P, P' étant formée dudit alliage de zinc et de nickel.

Comme indiqué précédemment, l'alliage formant la couche de glissement C, C', comprend au plus 0.5% en masse d'autres éléments que le nickel et le zinc, ces autres éléments pouvant être des éléments volontairement ajoutés ou des impuretés, le reste de l'alliage est constitué de Zinc.

Idéalement, l'alliage ne comprend aucun autre élément d'alliage que le zinc et le nickel.

Préférentiellement, la couche de glissement C, C' formée sur le substrat de la première pièce 7, 7' est disposée de manière à ce que dans des conditions normales d'utilisation de l'atterrisseur 1, la couche de glissement C, C' formée sur le substrat de la première pièce 7, 7' subisse une pression surfacique strictement inférieure à 250 MPa.

Pour la compréhension de l'invention, les conditions normales d'utilisation de l'atterrisseur sont toutes les utilisations de l'atterrisseur qui sont situées en dessous de limites maximales admissibles prédéterminées dans un cahier des charges d'atterrisseur en service. Une limite maximale prédéterminée peut être une limite de charge de l'atterrisseur, une contrainte mécanique limite prédéterminées applicables à l'atterrisseur, une plage de limites température applicables aux pièces de l'atterrisseur, un nombre de cycles maximum d'utilisation de l'atterrisseur. En dehors de ces conditions normales d'utilisation de l'atterrisseur, l'atterrisseur est susceptible de se dégrader.

Dans ce dernier mode de réalisation de l'invention, on limite la pression surfacique appliquée sur la couche de glissement en dessous de 250 MPa car au-delà de cette valeur, l'alliage de zinc-nickel se dégraderait fortement, perdrait ses caractéristiques de glissement et de protection du substrat et de la seconde pièce contre laquelle il frotte. Ainsi, l'emplacement de la couche d'alliage zinc-nickel sur l'atterrisseur est déterminé en fonction du niveau de charge que doit subir cette couche lorsque l'atterrisseur est en service dans des conditions normales d'utilisation.

Dans les zones où la pression surfacique dépasserait cette valeur maximale, il faut alors soit utiliser un autre revêtement plus résistant à la pression surfacique, comme le chrome, ou élargir la portée de la couche de frottement pour réduire la pression surfacique à supporter.

Dans les conditions d'usage prédéfinies de de la couche de glissement C, C' en alliage de zinc et nickel, c'est-à-dire lorsque la une pression surfacique est supérieure à 50 MPa et inférieure à 250 MPa tout en ayant une amplitude maximale de glissement rectiligne G, G' contre ladite couche de glissement C, C' strictement inférieure à 0.5mm, on constate une limitation de l'usure de contact / fretting entre les première et seconde pièces tout en réalisant une protection de la première pièce contre la corrosion.

Dans un mode de réalisation préférentiel, la seconde pièce 8, 8' est essentiellement composée de bronze.

Idéalement, cette seconde pièce 8, 8' comporte une surface de glissement en contact glissant contre la couche de glissement C, C' de la première pièce 7, 7'. Cette surface de glissement est composée d'un alliage de cadmium ou préférentiellement dudit alliage de zinc et de nickel. Ce mode de réalisation permet de réduire le coefficient de frottement entre les première et seconde pièces ce qui entraîne à une réduction accrue de l'usure de contact des première et seconde pièces.

A rugosité équivalente de surfaces planes frottant l'une contre l'autre, un glissement rectiligne entre deux couches d'alliage de zinc-nickel présente un coefficient de frottement inférieur à un glissement entre une couche d'alliage de zinc-nickel et une couche d'alliage de cadmium. Ainsi, l'usure de contact est moindre dans le mode de réalisation où l'on a un frottement entre deux couches d'alliage de zinc-nickel. Ce mode limite le besoin d'utiliser un autre alliage que le zinc-nickel ce qui est avantageux du point de vue du procédé de fabrication des pièces.

De manière générale, on préfère que le substrat en acier de la première pièce présente une résistance à la traction supérieure à 1000 MPa et préférentiellement inférieure à 1400 MPa. Compte tenu de cette forte résistance à la traction, cette première pièce peut être utilisée pour transmettre des efforts importants tout en étant particulièrement adaptée à résister à de l'usure de contact et à la corrosion grâce à la couche de frottement C, C' en alliage de zinc et de nickel.

Le substrat acier de la première pièce peut être dans une nuance de 35CD4, 300M, AISI4340, 35NCD16.

Idéalement, toute la première pièce 7, 7' est recouverte d'une couche continue d'alliage de zinc et de nickel. Cette couche continue constitue une couche de glissement C, C' là où cette couche glisse de manière rectiligne contre la seconde pièce 8, 8' et elle constitue une couche de protection P, P' contre la corrosion dans les autres endroits de la première pièce 7, 7' qui ne sont pas destinés à frotter contre la seconde pièce 8, 8'. Ainsi, la couche de protection P, P' qui est composée dudit alliage de zinc et de nickel s'étend sur le substrat de la première pièce 7, 7' qui la porte, en allant du bord de la couche de glissement C, C' vers l'extérieur cette couche de glissement C, C'.

Idéalement, toute la seconde pièce 8, 8' est recouverte d'une couche continue d'alliage de zinc et de nickel. Cette couche continue constitue une surface de glissement de la seconde pièce 8, 8' là où cette surface glisse de manière rectiligne contre la première pièce et elle constitue une couche de protection contre la corrosion dans les autres endroits de la seconde pièce 8, 8' qui ne sont pas destinés à frotter contre la première pièce 7, 7'. Idéalement, la seconde pièce présente un substrat en bronze protégé par une surface de glissement en alliage de zinc et de nickel.

On note que la couche de glissement C, C' présente une épaisseur préférentiellement comprise entre 10 et 50 microns d'épaisseurs, de même la couche de protection contre la corrosion est présente une épaisseur comprise entre 10 et 50 microns d'épaisseurs.

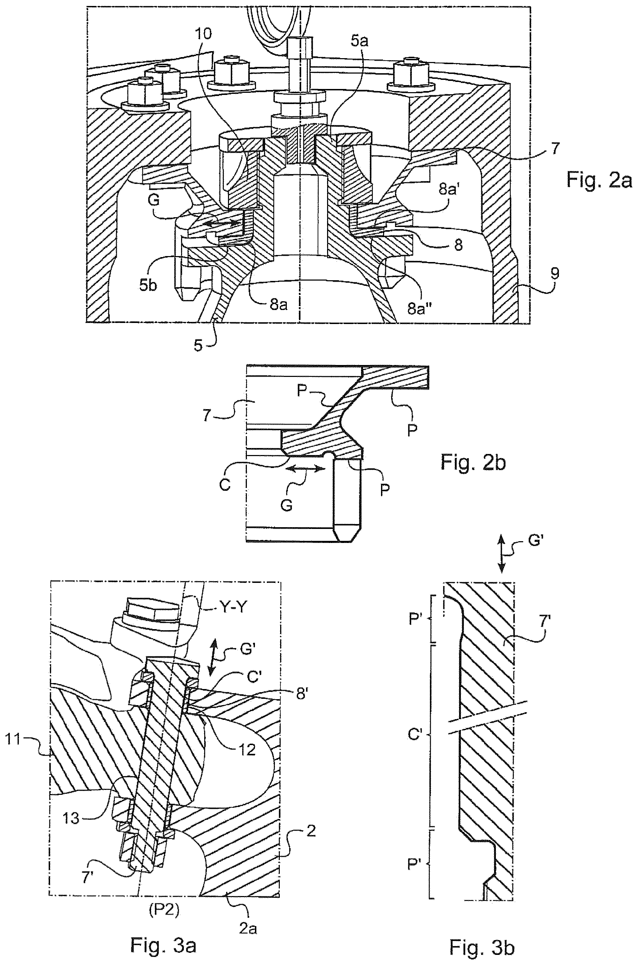

En référence aux figures 1, 2a, 2b, il va maintenant être présenté un premier couple de première et seconde pièces 7, 8 du type général précité. Ici, ce premier couple est utilisé comme interface de liaison entre l'amortisseur 5 de l'atterrisseur et un caisson 9 de l'atterrisseur.

Dans cette utilisation, le caisson tubulaire 9 est agencé pour être relié à la structure de l'aéronef 6, ici symbolisée par des traits en pointillés. Ce caisson 9 peut être directionnel dans le cas où l'atterrisseur est orientable.

La tige d'atterrisseur 2 est montée coulissante à l'intérieur du caisson tubulaire 9 et l'amortisseur 5 s'étend au moins partiellement à l'intérieur du caisson tubulaire 9 pour y amortir un déplacement relatif de la tige d'atterrisseur 2 par rapport au caisson tubulaire 9.

Ce premier couple de première et seconde pièces 7, 8 forme ici une interface de positionnement d'un corps supérieur de l'amortisseur 5 vis-à-vis du caisson tubulaire 9.

La première pièce 7 est fixée à l'intérieur du caisson tubulaire 9 par boulonnage. Dans le cas présent, pour des raisons de légèreté, le caisson tubulaire 9 est en aluminium de type Aluminium 7010 ou 7050.

Le corps supérieur de l'amortisseur 5 présente une tête cylindrique 5a qui passe au travers d'un alésage traversant la seconde pièce 8 pour y être centré. Une portion de la seconde pièce 8 est placée à l'intérieur d'un alésage traversant la première pièce 7 alors qu'un épaulement annulaire 8a de cette seconde pièce 8 s'étend vers l'extérieur de cette seconde pièce 8. Cet épaulement annulaire 8a présente des faces opposées entre elles 8a', 8a". L'une de ces faces 8a' de l'épaulement annulaire 8a est plane et vient en appui plan contre la couche de glissement C formée sur le substrat de la première pièce 7 afin d'y glisser. L'autre de ces faces 8a" de l'épaulement annulaire 8a est en appui contre une face complémentaire 5b formée à l'extérieur du corps supérieur de l'amortisseur 5.

Les alésages traversant les première et seconde pièces sont coaxiaux entre eux et vis-à-vis de l'axe principal X-X de l'atterrisseur.

La portion de la seconde pièce 8 placée à l'intérieur de l'alésage traversant la première pièce 7 est ajustée de manière à permettre, vis-à-vis de l'alésage traversant la première pièce 7, un jeu radial inférieur à 60 microns préférentiellement compris entre 5 et 30 microns. Ce jeu radial est perpendiculaire au plan d'appui entre les première et seconde pièces 7, 8. L'amplitude maximale de glissement rectiligne de la seconde pièce 8 contre ladite couche de glissement C de la première pièce 7 étant ainsi au plus égale à ce jeu radial. Ce jeu radial permet ainsi de définir ladite amplitude maximale de glissement rectiligne G autorisée de cette seconde pièce 8 contre ladite couche de glissement C. La pression surfacique appliquée sur la couche de glissement correspond à la force de compression appliquée par l'amortisseur sur le caisson 9 via couche de glissement C divisée par la surface de cette couche C. Cette pression est fréquemment supérieure à 50 MPa et la couche de glissement est ainsi étudiée pour pouvoir accepter sans risque de dégradation, une charge maximale comprise entre 50 MPa et 250 MPa.

MPa La tête cylindrique 5a du corps supérieur de l'amortisseur 5 est filetée extérieurement. Un écrou 10 est fileté sur cette tête 5a pour venir serrer entre cet écrou 10 et ladite face complémentaire 5b formée à l'extérieur du corps supérieur de l'amortisseur 5, la première pièce 7 avec sa couche de glissement C et l'épaulement annulaire 8a de la seconde pièce 8.

Ce serrage de l'écrou permet de maintenir un contact constant entre la couche de glissement C de la première pièce 7 et la seconde pièce 8.

Dans ce mode de réalisation des figures 2a et 2b, on peut avoir un jeu fonctionnel de glissement selon un plan perpendiculaire à l'axe X-X avec une capacité de glissement rectiligne G inférieure à 100 microns le long de la couche de glissement C. La couche C permet de réduire l'usure de contact entre les première et seconde pièces tout en protégeant la première pièce contre la corrosion.

Comme d'une part la première pièce 7 est fixée de manière rigide au caisson tubulaire 9 et d'autre part la seconde pièce 8 est fixée de manière rigide au corps supérieur de l'amortisseur, le seul mouvement relatif autorisé entre le caisson 9 et le corps 5 se fait par glissement contre la couche de glissement prévue à cet effet, sans risque de dégrader le caisson ou l'amortisseur.

En référence aux figures 1, 3a, 3b, il va maintenant être présenté un autre premier couple de première et seconde pièces 7', 8' du type général précité. Ici, ce premier couple est utilisé comme interface de liaison entre la tige d'atterrisseur 2 et une attache de remorquage 11 de l'aéronef.

Plus particulièrement, la première pièce 7' est un axe de liaison 7' reliant la tige d'atterrisseur 2 à une attache de remorquage 11 adaptée et disposée pour être tractée à l'aide d'un véhicule de remorquage de l'aéronef.

La couche de glissement C' formée sur le substrat de la première pièce 7' constitue une couche cylindrique droite s'étendant le long de l'axe de liaison 7'. L'axe de liaison 7' s'étend dans au moins un alésage 12 traversant la tige d'atterrisseur 2 et dans au moins un alésage 13 traversant ladite attache de remorquage 11.

Ici, la couche de glissement C' permet de transmettre les efforts de remorquage de l'aéronef vers la tige de l'atterrisseur tout en acceptant un léger mouvement entre l'attache 11 et la tige 2. Comme le frottement est localisé au niveau de la couche de frottement en zinc nickel, on limite le risque d'usure de l'attache 11 et de la tige 2.

Le glissement rectiligne G' de la seconde pièce 8' contre la couche de glissement C' de la première pièce 7' est un glissement parallèle à une direction longitudinale Y-Y selon laquelle s'étend ledit axe de liaison 7' constituant ladite première pièce 7'. Ici, il n'est pas question de frottement plan sur plan comme dans l'exemple précédent, mais plutôt d'un frottement entre ces surfaces annulaires cylindriques, occasionné par le glissement rectiligne G' coaxial des cylindres.

La seconde pièce 8' forme ainsi un coussinet 8' monté serré à l'intérieur dudit au moins un alésage traversant la tige d'aéronef 2.

Ce coussinet présente préférentiellement un substrat en bronze et une surface de glissement en alliage de cadmium ou préférentiellement en alliage de zinc et de nickel formée sur le substrat de bronze, pour être en vis-à-vis de la couche de glissement C'.

L'axe de liaison 7' est coulissant à l'intérieur dudit coussinet 8' dans la limite d'une amplitude de coulissement maximum qui constitue ladite amplitude maximale de glissement rectiligne G' de cette seconde pièce 8' contre la couche de glissement C' de la première pièce 7'. Idéalement, ce jeu est inférieur à 100 microns et est préférentiellement compris entre 0.016 et 0.052 microns, il est idéalement de 50 microns.

Comme indiqué précédemment, lors du remorquage de l'aéronef, la couche C' peut être comprimée avec une pression surfacique supérieure à 50 MPa tout en supportant un glissement G' inférieur à 0.5 mm.

Outre cette usure de contact associée au coulissement de l'axe de liaison 7', une usure de contact supplémentaire est la conséquence de légers mouvements de rotation de l'axe de liaison 7' vis-à-vis des alésages qu'il traverse.

Comme dans la précédente application, la couche C' permet de limiter l'usure par fretting tout en limitant la corrosion de la première pièce 7'.

Il va maintenant être indiqué une méthodologie pour appliquer une couche de glissement C, C' en alliage de zinc et de nickel sur une première pièce 7, 7' afin de la préserver de l'usure.

La première pièce en acier est plongée dans un bain alcalin contenant du zinc et du nickel sous forme d'ions et un potentiel électrique est appliqué entre une électrode plongée dans le bain et la première pièce en acier.

L'usage d'un bain alcalin permet de limiter le risque de dégradation, par attaque acide, de la première pièce lors du dépôt électrolytique de la couche d'alliage en Zinc et Nickel. Ce bain alcalin peut être obtenu en versant dans le bain une solution d'hydroxyde de sodium et/ou de l'hydroxyde de potassium, du nickel sous forme de sulfate de nickel, du zinc sous forme de zincate et des agents complexant nécessaires à la complexation du zinc et du nickel comme des amines telles que du diéthylène triamine et des additifs organiques comme des brillanteurs ou des agents nivelant.

Typiquement, la première pièce est plongée dans le bain pour jouer le rôle d'une cathode, des anodes fixes immergées dans le bain servent à déposer sur des parties extérieures de la première pièce 7, 7' ne nécessitant pas d'outillage spécifique. Si nécessaire en fonction de la géométrie de la première pièce, d'autres anodes peuvent être utilisées pour constituer des outils rapportés en vis-à-vis de zones de la première pièce difficiles d'accès. Pour limiter des surépaisseurs locales, il est aussi possible de disposer, des caches et/ou voleurs de courant en vis-à-vis de portions de la première pièce.

Cet outillage constitué des anodes, caches et voleurs de courant permet d'avoir une épaisseur homogène au cours du dépôt. Le temps de réalisation du dépôt et la densité de courant imposée entre les anodes et la première pièce plongé dans le bain définissent l'épaisseur finale de la couche zinc-nickel obtenue.

Ces outillages et paramètres de temps et de densité de courant sont ajustés pour obtenir une épaisseur de couche finale C, C' prédéterminée sans nécessiter de reprise par polissage ou rectification.

Préférentiellement, préalablement à au dépôt de la couche sur la première pièce, on prépare la surface du substrat en acier pour en adapter la rugosité en fonction d'une rugosité cible à obtenir sur la couche C, C'.

Typiquement, cette préparation de surface se fait par dégraissage suivi d'une activation de surface mécanique ou chimique permettant d'améliorer l'accroche de la couche de zinc-nickel, par exemple par sablage.

Cette étape permet d'améliorer l'accroche de la couche de Zn-Ni sur l'acier.

On peut aussi passiver la couche d'alliage de zinc et de nickel appliquée en l'immergeant, dans une solution d'acide contenant par exemple du chrome trivalent.

Cette passivation permet d'améliorer la protection anticorrosion conférée par la couche de Zn-Ni déposée sur la première pièce.

Selon un mode particulier du procédé de fabrication d'une tige d'atterrisseur selon l'invention, on met en oeuvre une étape de dégazage d'hydrogène potentiellement occlus dans l'acier, cette étape de dégazage comprenant le placement de la tige dans un four pendant au moins 12 heures en maintenant le four à une température de 190°C à plus ou moins 14°C. Ce dégazage permet d'évacuer l'hydrogène fragilisant qui est potentiellement occlus dans le substrat d'acier.

Le procédé de dépôt de couche en alliage de zinc et de nickel présenté ci-avant en référence à la première pièce est bien entendu applicable à toute autre pièce telle qu'une seconde pièce 8, 8', éventuellement en bronze recouverte d'alliage Zn-Ni.

## Revendications

1. Atterrisseur (1) pour aéronef comportant :
- une tige d'atterrisseur (2) s'étendant selon un axe principal (X-X) de l'atterrisseur (1) ;
- au moins un essieu (3) relié mécaniquement à un premier côté (2a) de la tige d'atterrisseur (2) ;
- au moins une roue (4) montée à rotation autour dudit au moins un essieu ;
- au moins un amortisseur (5) disposé pour amortir un mouvement de coulissement de ladite tige d'atterrisseur (2) par rapport à une structure de l'aéronef (6);
l'atterrisseur (1) comportant en outre au moins un premier couple de première et seconde pièces (7, 8, 7', 8'), ladite première pièce (7, 7') présentant un substrat en acier et une couche de glissement (C, C') formée sur ce substrat, la seconde pièce (8, 8') étant montée en contact glissant contre ladite couche de glissement (C, C'), ledit montage en contact glissant autorisant une amplitude maximale de glissement rectiligne (G, G') de cette seconde pièce (8, 8') contre ladite couche de glissement (C, C') de la première pièce (7, 7'), strictement inférieure à 0.5mm, la couche de glissement (C, C') étant adaptée à supporter, au moins lors du glissement, une pression surfacique supérieure à 50 MPa, **caractérisé en ce que** :
- la couche de glissement (C, C') est en alliage de zinc et de nickel comportant, en pourcentage massique de l'alliage, entre 12% et 18% de nickel, au plus 0.5% d'autres éléments que le nickel et le zinc, le reste étant du zinc ; et **en ce que**
- la première pièce présente en outre une couche de protection (P, P') contre la corrosion s'étendant depuis la couche de glissement (C, C'), cette couche de protection (P, P') étant formée dudit alliage de zinc et de nickel.

2. Atterrisseur (1) selon la revendication 1, dans lequel ladite couche de glissement (C, C') formée sur le substrat de la première pièce (7, 7') est disposée de manière à ce que, dans des conditions normales d'utilisation de l'atterrisseur (1), la couche de glissement (C, C') formée sur le substrat de la première pièce (7, 7') subisse toujours une pression surfacique strictement inférieure à 250 MPa.

3. Atterrisseur (1) selon la revendication 1, comportant un caisson tubulaire (9) agencé pour être relié à la structure de l'aéronef (6), ladite tige d'atterrisseur (2) étant montée coulissante à l'intérieur de ce caisson tubulaire (9) et ledit au moins un amortisseur (5) s'étendant au moins partiellement à l'intérieur dudit caisson tubulaire (9) pour y amortir un déplacement relatif de la tige d'atterrisseur (2) par rapport au caisson tubulaire (9), ledit premier couple de première et seconde pièces (7, 8) formant une interface de positionnement d'un corps supérieur de l'amortisseur (5) vis-à-vis dudit caisson tubulaire (9).

4. Atterrisseur (1) selon la revendication 3, dans lequel la première pièce (7) est fixée à l'intérieur du caisson tubulaire (9), le corps supérieur de l'amortisseur (5) présentant une tête cylindrique (5a) passant au travers d'un alésage traversant la seconde pièce (8) pour y être centré, une portion de la seconde pièce étant placée à l'intérieur d'un alésage traversant la première pièce (7) et un épaulement annulaire (8a) de cette seconde pièce (8) s'étendant vers l'extérieur de cette seconde pièce (8), cet épaulement annulaire (8a) présentant des faces opposées entre elles (8a', 8a"), l'une de ces faces de l'épaulement annulaire (8a') étant plane et venant en appui plan contre la couche de glissement (C) formée sur le substrat de la première pièce (7) afin de pouvoir y glisser, l'autre de ces faces (8a") de l'épaulement annulaire (8a) étant en appui contre une face complémentaire (5b) formée à l'extérieur du corps supérieur de l'amortisseur (5).

5. Atterrisseur (1) selon la revendication 4, dans lequel la portion de la seconde pièce (8) placée à l'intérieur de l'alésage traversant la première pièce (7) est ajustée de manière à permettre, vis-à-vis de l'alésage traversant la première pièce (7), un jeu radial inférieur à 60 microns, préférentiellement compris entre 5 et 30 microns, l'amplitude maximale de glissement rectiligne de la seconde pièce (8) contre ladite couche de glissement (C) de la première pièce (7) étant ainsi au plus égale à ce jeu radial.

6. Atterrisseur (1) selon l'une quelconque des revendications 4 ou 5, dans lequel la tête cylindrique (5a) du corps supérieur de l'amortisseur (5) est filetée extérieurement et un écrou (10) est fileté sur cette tête (5a) pour venir serrer entre cet écrou (10) et ladite face complémentaire (5b) formée à l'extérieur du corps supérieur de l'amortisseur (5), la première pièce (7) avec sa couche de glissement (C) et l'épaulement annulaire (8a) de la seconde pièce (8).

7. Atterrisseur selon l'une quelconque des revendications 1 ou 2, dans lequel, la première pièce (7') est un axe de liaison (7') reliant la tige d'atterrisseur (2) à une attache de remorquage (11) adaptée et disposée pour être tractée à l'aide d'un véhicule de remorquage de l'aéronef, la couche de glissement (C) formée sur le substrat de la première pièce (7') étant une couche cylindrique droite s'étendant le long de l'axe de liaison (7'), l'axe de liaison (7') s'étendant dans au moins un alésage traversant (12) la tige d'atterrisseur (2) et dans au moins un alésage (13) traversant ladite attache de remorquage (11).

8. Atterrisseur (1) selon la revendication 7, dans lequel ledit glissement rectiligne (G') de la seconde pièce (8') contre ladite couche de glissement (C') de la première pièce (7') est un glissement parallèle à une direction longitudinale (Y-Y) selon laquelle s'étend ledit axe de liaison constituant ladite première pièce (7').

9. Atterrisseur selon l'une quelconque des revendications 7 ou 8, dans lequel la seconde pièce (8') est un coussinet (8') monté serré à l'intérieur dudit au moins un alésage traversant la tige d'aéronef (2), l'axe de liaison (7') étant coulissant à l'intérieur dudit coussinet (8') dans la limite d'une amplitude de coulissement maximum qui constitue ladite amplitude maximale de glissement rectiligne (G') de cette seconde pièce (8') contre ladite couche de glissement (C') de la première pièce (7').

10. Atterrisseur selon l'une quelconque des revendications précédentes dans lequel la seconde pièce (8, 8') est essentiellement composée de bronze.

11. Atterrisseur selon l'une quelconque des revendications précédentes dans lequel la seconde pièce (8, 8') comporte une surface de glissement en contact glissant contre la couche de glissement (C, C') de la première pièce (7, 7'), la surface de glissement de cette seconde pièce (8, 8') étant composée d'un alliage de cadmium ou préférentiellement dudit alliage de zinc et de nickel.

12. Atterrisseur selon l'une quelconque des revendications précédentes, dans lequel ledit alliage de zinc et de nickel contient entre 12% et 16% de nickel.

13. Atterrisseur selon l'une quelconque des revendications précédentes, ladite amplitude maximale de glissement rectiligne de la seconde pièce contre ladite couche de glissement de la première pièce est strictement inférieure à 100 microns et préférentiellement inférieure à 60 microns.

## Patentansprüche

1. Fahrwerk (1) für ein Luftfahrzeug, umfassend:
- eine Fahrwerkstange (2), die sich entlang einer Hauptachse (X-X) des Fahrwerks (1) erstreckt;
- mindestens eine Radachse (3), die mechanisch mit einer ersten Seite (2a) der Fahrwerkstange (2) verbunden ist;
mindestens ein Rad (4), das drehbar um die genannte mindestens eine Radachse gelagert ist;
- mindestens einen Stoßdämpfer (5), der angeordnet ist, um eine Verschiebebewegung der genannten Fahrwerkstange (2) in Bezug auf eine Luftfahrzeugstruktur (6) zu dämpfen;
wobei das Fahrwerk (1) ferner mindestens ein erstes Paar aus einem ersten und einem zweiten Teil (7, 8, 7', 8') umfasst, wobei das genannte erste Teil (7, 7') ein Substrat aus Stahl und eine auf diesem Substrat gebildete Gleitschicht (C, C') aufweist, wobei das zweite Teil (8, 8') in gleitendem Kontakt an der genannten Gleitschicht (C, C') montiert ist, wobei die genannte Montage in gleitendem Kontakt eine maximale Amplitude (G, G') eines geradlinigen Gleitens dieses zweiten Teils (8, 8') an der genannten Gleitschicht (C, C') des ersten Teils (7, 7') gestattet, streng kleiner als 0,5 mm, wobei die Gleitschicht (C, C') daran angepasst ist, zumindest während des Gleitens einem Oberflächendruck, der höher als 50 MPa ist, standzuhalten, **dadurch gekennzeichnet, dass**:
- die Gleitschicht (C, C') eine Zink- und Nickellegierung ist, die in Massenprozent der Legierung zwischen 12% und 18% Nickel und höchstens 0,5% andere Elemente als Nickel und Zink umfasst, wobei der Rest Zink ist; und dass
- das erste Teil ferner eine Schutzschicht (P, P') zum Schutz vor Korrosion aufweist, die sich ab der Gleitschicht (C, C') erstreckt, wobei diese Schutzschicht (P, P') aus der genannten Zink- und Nickellegierung gebildet ist.

2. Fahrwerk (1) nach Anspruch 1, bei dem die genannte auf dem Substrat des ersten Teils (7, 7') gebildete Gleitschicht (C, C') derart angeordnet ist, dass unter normalen Nutzungsbedingungen des Fahrwerks (1) die auf dem Substrat des ersten Teils (7, 7') gebildete Gleitschicht (C, C') immer einem Oberflächendruck ausgesetzt ist, der streng kleiner als 250 MPa ist.

3. Fahrwerk (1) nach Anspruch 1, umfassend einen rohrförmigen Kasten (9), der ausgebildet ist, um mit der Luftfahrzeugstruktur (6) verbunden zu werden, wobei die genannte Fahrwerkstange (2) im Inneren dieses rohrförmigen Kastens (9) verschiebbar gelagert ist und der genannte mindestens eine Stoßdämpfer (5) sich zumindest teilweise im Inneren des genannten rohrförmigen Kastens (9) erstreckt, um dort eine Relativbewegung der Fahrwerkstange (2) in Bezug auf den rohrförmigen Kasten (9) zu dämpfen, wobei das genannte erste Paar aus einem ersten und einem zweiten Teil (7, 8) eine Positionierungsschnittstelle zur Positionierung eines oberen Gehäuses des Stoßdämpfers (5) gegenüber dem genannten rohrförmigen Kasten (9) bildet.

4. Fahrwerk (1) nach Anspruch 3, bei dem das erste Teil (7) im Inneren des rohrförmigen Kastens (9) befestigt ist, wobei das obere Gehäuse des Stoßdämpfers (5) einen zylindrischen Kopf (5a) aufweist, der durch eine das zweite Teil (8) durchsetzende Bohrung hindurchgeht, um dort zentriert zu werden, wobei ein Abschnitt des zweiten Teils im Inneren einer das erste Teil (7) durchsetzenden Bohrung platziert ist und sich eine ringförmige Schulter (8a) dieses zweiten Teils (8) von diesem zweiten Teil (8) nach außen erstreckt, wobei diese ringförmige Schulter (8a) einander abgewandte Flächen (8a', 8a") aufweist, wobei eine dieser Flächen der ringförmigen Schulter (8a') eben ist und in plane Anlage an der auf dem Substrat des ersten Teils (7) gebildeten Gleitschicht (C) kommt, um dort gleiten zu können, wobei die andere dieser Flächen (8a") der ringförmigen Schulter (8a) an einer komplementären Fläche (5b) anliegt, die auf der Außenseite des oberen Gehäuses des Stoßdämpfers (5) ausgebildet ist.

5. Fahrwerk (1) nach Anspruch 4, bei dem der Abschnitt des zweiten Teils (8), der im Inneren der das erste Teil (7) durchsetzenden Bohrung platziert ist, derart angepasst ist, dass er gegenüber der das erste Teil (7) durchsetzenden Bohrung ein radiales Spiel gestattet, das kleiner als 60 Mikrometer ist, vorzugsweise zwischen 5 und 30 Mikrometer, wobei die maximale Amplitude des geradlinigen Gleitens des zweiten Teils (8) an der genannten Gleitschicht (C) des ersten Teils (7) folglich höchstens gleich diesem radialen Spiel ist.

6. Fahrwerk (1) nach einem der Ansprüche 4 oder 5, bei dem der zylindrische Kopf (5a) des oberen Gehäuses des Stoßdämpfers (5) mit einem Außengewinde versehen ist und eine Mutter (10) auf diesen Kopf (5a) geschraubt ist, um zwischen dieser Mutter (10) und der genannten komplementären Fläche (5b), die auf der Außenseite des oberen Gehäuses des Stoßdämpfers (5) gebildet ist, das erste Teil (7) mit seiner Gleitfläche (C) und die ringförmige Schulter (8a) des zweiten Teils (8) einzuspannen.

7. Fahrwerk (1) nach einem der Ansprüche 1 oder 2, bei dem das erste Teil (7') eine Verbindungsachse (7') ist, die die Fahrwerkstange (2) mit einer Schleppbefestigung (11) verbindet, die dazu geeignet und angeordnet ist, um mittels eines Schleppfahrzeugs zum Schleppen des Luftfahrzeugs geschleppt zu werden, wobei die auf dem Substrat des ersten Teils (7') gebildete Gleitschicht (C) eine gerade zylindrische Schicht ist, die sich längs der Verbindungsachse (7') erstreckt, wobei sich die Verbindungsachse (7') in mindestens einer die Fahrwerkstange (2) durchsetzenden Bohrung und in mindestens einer die genannte Schleppbefestigung (11) durchsetzenden Bohrung (13) erstreckt.

8. Fahrwerk (1) nach Anspruch 7, bei dem das genannte geradlinige Gleiten (G') des zweiten Teils (8') an der genannten Gleitschicht (C') des ersten Teils (7') ein Gleiten parallel zu einer Längsrichtung (Y-Y) ist, in der sich die genannte Verbindungsachse, die das genannte erste Teil (7') bildet, erstreckt.

9. Fahrwerk nach einem der Ansprüche 7 oder 8, bei dem das zweite Teil (8') eine Lagerbuchse (8') ist, die fest im Inneren der genannten mindestens einen die Fahrwerkstange (2) durchsetzenden Bohrung montiert ist, wobei die Verbindungsachse (7') im Inneren der genannten Lagerbuchse (8') innerhalb einer maximalen Gleitamplitude verschiebbar ist, die die genannte maximale Amplitude des geradlinigen Gleitens (G') dieses zweiten Teils (8') an der genannten Gleitschicht (C') des ersten Teils (7') bildet.

10. Fahrwerk nach einem der vorhergehenden Ansprüche, bei dem das zweite Teil (8, 8') im Wesentlichen aus Bronze besteht.

11. Fahrwerk nach einem der vorhergehenden Ansprüche, bei dem das zweite Teil (8, 8') eine Gleitfläche in gleitendem Kontakt an der Gleitschicht (C, C') des ersten Teils (7, 7') umfasst, wobei die Gleitfläche dieses zweiten Teils (8, 8') aus einer Cadmiumlegierung oder vorzugsweise der genannten Zink- und Nickellegierung besteht.

12. Fahrwerk nach einem der vorhergehenden Ansprüche, bei dem die Zink- und Nickellegierung zwischen 12% und 16% Nickel enthält.

13. Fahrwerk nach einem der vorhergehenden Ansprüche, wobei die genannte maximale Amplitude des geradlinigen Gleitens des zweiten Teils an der genannten Gleitschicht des ersten Teils streng kleiner als 100 Mikrometer und vorzugsweise kleiner als 60 Mikrometer ist.

## Claims

1. Landing gear (1) for aircraft comprising:
- a landing gear strut (2) extending along a main axis (X-X) of the landing gear (1);
- at least one axle (3), mechanically connected to a first side (2a) of the strut (2);
- at least one wheel (4), rotatably mounted about said at least one axle;
- at least one damper (5) arranged to dampen a sliding movement of said landing gear strut (2) relative to the structure of the aircraft (6);
the landing gear (1) further comprises at least one pair of first and second parts (7, 8, 7', 8'), said first part (7, 7') having a steel substrate and a sliding layer (C, C') formed on this substrate, the second part (8, 8') being mounted in sliding contact against said sliding layer (C, C'), said mounting in sliding contact allowing a maximum rectilinear sliding amplitude (G, G') of this second (8, 8') part against said sliding layer (C, C') of the first part (7, 7'), strictly less than 0.5 mm, the sliding layer (C, C') being adapted to support, at least during the sliding, a surface pressure in excess of 50 MPa, wherein:
- the sliding layer (C, C') is made of a zinc and nickel alloy comprising, in terms of percentage by weight of the alloy, between 12% and 18% nickel, at most 0.5% of other elements such as nickel and zinc, the remainder being zinc; and wherein
- the first part also has a protective layer (P, P') against corrosion extending from the sliding layer (C, C'), this protective layer (P, P') being formed of said zinc and nickel alloy.

2. Landing gear (1) according to Claim 1, wherein the sliding layer (C, C') formed on the substrate of the first part (7, 7') is arranged so that, in normal conditions of use of the landing gear (1), the sliding layer (C, C') formed on the substrate of the first part (7, 7') is subject to surface pressure strictly less than 250 MPa.

3. Landing gear (1) according to Claim 1, comprising a tubular housing (9) arranged to be connected to the aircraft structure (6), said landing gear strut (2) being slidably mounted inside this tubular housing (9) and said at least one damper (5) extending at least partially inside said tubular housing (9) for damping a relative movement of the landing gear strut (2) in relation to the tubular housing (9), said first pair of first and second parts (7, 8) forming a positioning interface of an upper body of the damper (5) in relation to the tubular housing (9).

4. Landing gear (1) according to Claim 3, wherein the first part (7) is secured inside the tubular housing (9), the upper body of the damper (5) having a cylindrical head (5a) passing through a bore passing through the second part (8) so as to be centred therein, a portion of the second part being placed inside a bore passing through the first part (7) and an annular shoulder (8a) of this second part (8) extending outwardly from this second part (8), this annular shoulder (8a) having faces opposite one another (8a', 8a"), one of these faces of the annular shoulder (8a') being planar and bearing against the sliding layer (C) formed on the substrate of the first part (7) in order to slide therein, the other of these faces (8a") of the annular shoulder (8a) bearing against a complementary face (5b) formed on the outside of the upper body of the damper (5).

5. Landing gear (1) according to Claim 4, wherein the portion of the second part (8) placed inside the bore passing through the first part (7) is adjusted so as to allow, relative to the bore passing through the first part (7), a radial clearance of less than 60 microns, preferably between 5 and 30 microns, the maximum rectilinear sliding amplitude of the second part (8) against said sliding layer (C) of the first part (7) thus being at most equal to this radial clearance.

6. Landing gear (1) according to any one of Claims 4 or 5, wherein the cylindrical head (5a) of the upper body of the damper (5) is externally threaded and a nut (10) is threaded onto the head (5a) to tighten the first part (7) with its sliding layer (C) and the annular shoulder (8a) of the second part (8) between this nut (10) and said complementary face (5b) formed on the outside of the upper body of the damper (5).

7. Landing gear according to any one of Claims 1 or 2, wherein the first part (7') is a connecting pin (7') connecting the landing gear strut (2) to a towing attachment (11) adapted and arranged to be towed by an aircraft towing vehicle, the sliding layer (C) formed on the substrate of the first part (7') being a straight cylindrical layer extending along the connecting pin (7'), the connecting pin (7') extending in at least one bore (12) passing through the landing gear strut (2) and in at least one bore (13) passing through said fastener towing attachment (11).

8. Landing gear (1) according to Claim 7, wherein said rectilinear sliding (G') of the second part (8') against the sliding layer (C') of the first part (7') is a sliding movement that is parallel to a longitudinal direction (Y-Y) along which extends said connecting pin forming said first part (7').

9. Landing gear according to any one of Claims 7 or 8, wherein the second part (8') is a bushing (8') fit tightly inside said at least one bore passing through the aircraft strut (2), the connecting pin (7') being slidable inside said bushing (8') in the limit of a maximum sliding amplitude which comprises said maximum rectilinear amplitude sliding amplitude (G') of said second part (8') against said sliding layer (C') of the first part (7').

10. Landing gear according to any of the preceding claims wherein the second part (8, 8') is essentially composed of bronze.

11. Landing gear according to any of the preceding claims wherein the second part (8, 8') comprises a sliding surface in sliding contact against the sliding layer (C, C') of the first part (7, 7'), the sliding surface of this second part (8, 8') being composed of a cadmium alloy or preferably of said zinc and nickel alloy.

12. Landing gear according to any of the preceding claims, wherein said zinc and nickel alloy contains between 12% and 16% nickel.

13. Landing gear according to any of the preceding claims, said maximum rectilinear sliding amplitude of the second part against said sliding layer of the first part is strictly less than 100 microns and preferably less than 60 microns.
